# FASCICULE DE BREVET EUROPEEN

(11) **EP 0 706 159 B1**
(45) Date de publication et mention de la délivrance du brevet: **29.12.1997**
(21) Numéro de dépôt: 95401984.0
(22) Date de dépôt: 31.08.1995
(51) Int. Cl.: G09F 3/20, G09F 3/16

(54) **Dispositif de repérage, notamment pour conducteur électrique ou bloc de jonction**
Vorrichtung zur Kennzeichnung von insbesondere einer elektrischen Leitung oder einer Reihenklemme
Marking device, particularly for electric conductor or junction block

(30) Priorité: 06.09.1994 FR 9410651
(43) Date de publication de la demande: 10.04.1996
(73) Titulaire: LEGRAND, F-87045 Limoges Cédex (FR); LEGRAND SNC, F-87045 Limoges (FR)
(72) Inventeur: Cornu, Hervé, F-76370 Roumesnil Bouteilles (FR)
(74) Mandataire: CABINET BONNET-THIRION

(56) Documents cités:
- EP-A- 0 121 454
- FR-A- 2 638 879
- US-A- 3 068 600

## Description

La présente invention concerne d'une manière générale les dispositifs de repérage du genre comportant, d'une part, une platine, qui est destinée à recevoir un message d'identification, et, d'autre part, au moins une paire de jambages, qui, disposés en vis-à-vis l'un de l'autre, sont propres à en permettre l'assujettissement à un support, et qui, dans l'intervalle qui leur est commun, comportent chacun un retour en direction de la platine.

Des dispositifs de repérage de ce type font notamment l'objet du brevet français qui, déposé le 4 mars 1983 sous le No 83 03575, a été publié sous le No 2 542 143.

Dans ce brevet français, qui concerne en pratique le repérage de conducteurs électriques, la platine n'est destinée à recevoir qu'un message d'identification relativement court, une simple lettre ou un simple chiffre par exemple, plusieurs dispositifs de repérage devant être mis côte à côte pour la composition d'un message d'identification plus complexe.

La platine n'a donc qu'une extension relativement réduite, et elle n'est équipée que d'une seule paire de jambages.

Il est connu, par ailleurs, notamment par le brevet américain No 3 068 600, des dispositifs de repérage dont la platine présente une extension suffisante pour recevoir, sinon elle-même, directement, au moins par l'intermédiaire d'une plaquette qui est dûment mise en place en son sein, un message d'identification relativement étendu, et qui, pour un assujettissement correct au conducteur électrique à repérer, comportent, à distance l'un de l'autre, deux moyens de fixation distincts.

Il s'agit, en l'espèce, non pas de jambages à retour du type de ceux décrits dans le brevet français No 83 03575, mais de pattes en U destinées à envelopper sur une partie de son pourtour le conducteur électrique à équiper.

La réalisation d'un tel dispositif de repérage est relativement complexe, et il en est de même de sa mise en place sur un conducteur électrique.

S'il est simplement substitué aux pattes en U des jambages à retour du type de ceux décrits dans le brevet français No 83 03575, la mise en place sur un conducteur électrique se trouve avantageusement simplifiée, mais la réalisation reste complexe.

La présente invention a d'une manière générale pour objet une disposition permettant de simplifier dans ce cas cette réalisation.

De manière plus précise, elle a pour objet un dispositif de repérage du genre comportant, d'une part, une platine, qui est destinée à recevoir un message d'identification, et, d'autre part, au moins une paire de jambages, qui, disposés en vis-à-vis l'un de l'autre, sont propres à en permettre l'assujettissement à un support, et qui, dans l'intervalle qui leur est commun, comportent chacun un retour en direction de la platine, ce dispositif de repérage étant d'une manière générale caractérisé en ce que, sur la largeur, au moins, de leur retour, appréciée parallèlement à la direction d'allongement de la platine, les jambages bordent, chacun respectivement, un évidement de la platine donnant accès à un tel retour.

Ainsi, lors du moulage de l'ensemble, un passage est avantageusement laissé au poinçon nécessaire au moulage des retours des jambages, en sorte que, au bénéfice de la productivité, et donc des coûts, le moule correspondant peut avantageusement être dépourvu de tout noyau mobile.

Préférentiellement, mais non nécessairement obligatoirement, le dispositif de repérage suivant l'invention comporte, à distance l'un de l'autre, deux paires de jambages, pour parfaire son assujettissement au support à équiper.

De manière usuelle, ce support peut être un conducteur électrique.

Mais, en variante, il peut s'agir aussi bien d'un quelconque autre support ayant une configuration de même type, et, par exemple, d'un faux conducteur électrique prévu à cet effet sur un quelconque appareillage électrique, bloc de jonction ou autre, à repérer.

En outre, suivant un développement de l'invention, lorsqu'il est ainsi prévu, à distance l'une de l'autre, deux paires de jambages, la platine peut avantageusement comporter, globalement transversalement, une zone de moindre résistance propre à permettre de partager l'ensemble en deux tronçons comportant chacun une de ces paires de jambages.

L'un de ces tronçons peut par exemple être rapporté sur un conducteur électrique, à l'une des extrémités de celui-ci, et l'autre sur l'appareillage électrique auquel ce conducteur électrique est lui-même raccordé à son autre extrémité.

Mais, les deux tronçons étant appariés à l'origine, le risque d'une éventuelle erreur dans l'établissement des messages d'identification correspondants, qui, le plus souvent, doivent être identiques, se trouve avantageusement minimisé.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un dispositif de repérage suivant l'invention, représenté en place sur un conducteur électrique ;
la figure 2 est, à échelle supérieure, une vue en perspective de ce seul dispositif de repérage, représenté isolément, vu de dessus ;
la figure 3 en est une vue en perspective, vu de dessous ;
la figure 4 en est, à échelle encore supérieure, une vue de bout, suivant la flèche IV de la figure 2 ;
la figure 5 est une vue en perspective analogue à celle de la figure 2, pour une variante de réalisation, avant partage en deux tronçons de l'ensemble ;
la figure 6 est une vue en perspective analogue à celle de la figure 5, après ce partage ;
la figure 7 est une vue en perspective illustrant la mise en place, sur un appareillage électrique, d'un des tronçons précédemment obtenus.

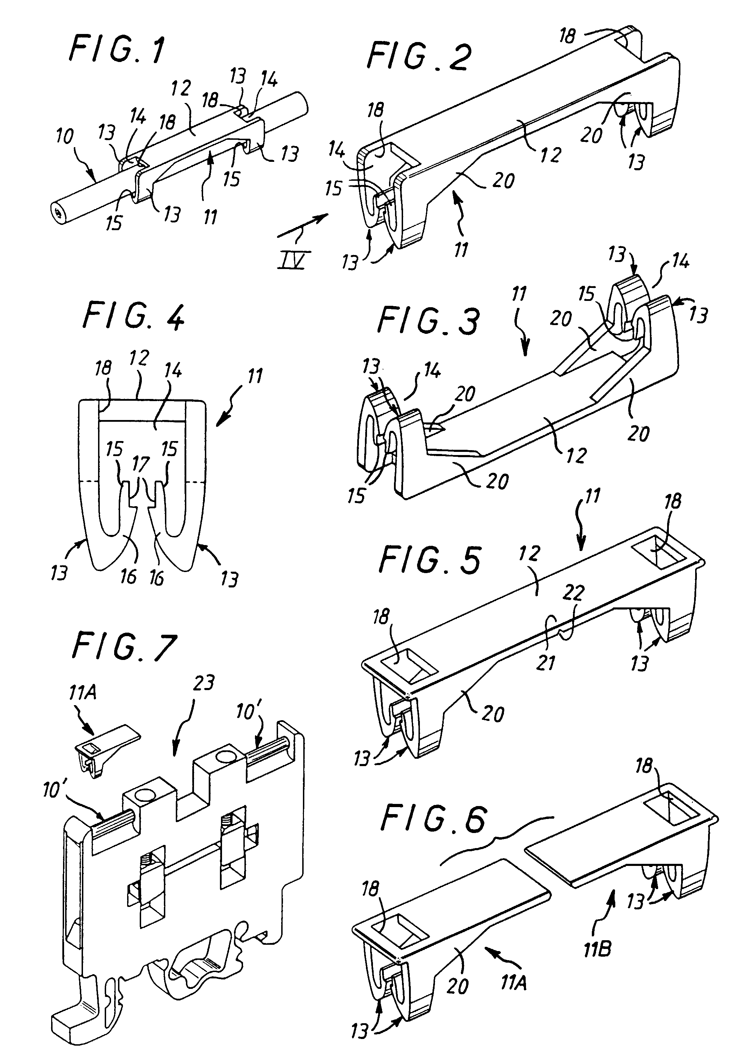

La figure 1 illustre, à titre d'exemple, l'application de l'invention à l'équipement d'un conducteur électrique 10.

Pour le repérage de ce conducteur électrique 10, il est mis en oeuvre, de manière connue en soi, un dispositif de repérage 11 comportant, d'une part, une platine 12, qui est destinée à recevoir un message d'identification, non représenté, et, d'autre part, au moins une paire de jambages 13, qui, disposés en vis-à-vis, sont propres à en permettre l'assujettissement à un quelconque support, et, en l'espèce, au conducteur électrique 10, et qui, dans l'intervalle 14 qui leur est commun, comportent chacun un retour 15 en direction de la platine 12.

En pratique, les jambages 13 sont du type de ceux décrits dans le brevet français No 83 03575.

De tels jambages 13 étant donc bien connus par eux-mêmes, ils ne seront pas décrits en détail ici.

Il suffira d'indiquer que leurs retours 15 se raccordent à eux par une zone de moindre épaisseur 16, formant charnière, et que, initialement globalement parallèles l'un à l'autre au repos, tel que représenté à la figure 4, ces retours 15 peuvent ainsi jouer élastiquement l'un par rapport à l'autre, pour enserrer le conducteur électrique 10.

Autrement dit, l'élasticité de leurs retours 15 s'ajoutant à leur propre élasticité, les jambages 13 interviennent globalement par pincement sur ce conducteur électrique 10, en maintenant celui-ci entre eux et la platine 12.

Dans les formes de réalisation représentées, et tel que décrit dans le brevet français No 83 03575, les retours 15 des jambages 13 présentent chacun, en regard l'un de l'autre, un décrochement 17.

La platine 12, quant à elle, se présente sous la forme générale d'une plaquette allongée suivant la direction d'allongement du conducteur électrique 10.

Dans la forme de réalisation représentée, cette plaquette est rectangulaire, mais elle peut présenter une toute autre forme, et, par exemple, être ovoïde.

Suivant l'invention, sur la largeur, au moins, de leur retour 15, appréciée parallèlement à la direction d'allongement de la platine 12, les jambages 13 bordent, chacun respectivement, un évidement 18 de cette platine 12 donnant accès à un tel retour 15.

Dans les formes de réalisation représentées, le dispositif de repérage 11 comporte, à distance l'une de l'autre, deux paires de jambages 13, et celles-ci sont en pratique disposées chacune respectivement aux deux extrémités de la platine 12.

Dans la forme de réalisation plus particulièrement représentée sur les figures 1 à 4, pour l'une au moins des paires de jambages 13, et, en pratique, pour chacune de celles-ci, l'évidement 18 de la platine 12 est une encoche ouverte sur le bord transversal correspondant de cette platine 12.

Dans la variante de réalisation représentée sur les figures 5 et 6, pour l'une au moins des paires de jambages 13, et, en pratique, pour chacune de celles-ci, l'évidement 18 de la platine 12 est un ajour de contour fermé.

Dans ce cas, et tel que représenté, la platine 12 se prolonge en porte à faux au-delà de chacune des paires de jambages 13.

En pratique, les jambages 13 s'étendent dans tous les cas le long des bords longitudinaux de la platine 12, à ras avec ceux-ci.

Dans les formes de réalisation représentées, chacun des jambages 13 est d'un seul tenant avec un flasque 20, qui, pour le raidissement de l'ensemble, le prolonge en continu du côté opposé au bord transversal correspondant de la platine 12, à son raccordement à cette platine 12, et qui, en pratique, s'étend au-delà de l'évidement 18 correspondant de cette platine 12, en direction de la zone médiane de celle-ci.

Dans la forme de réalisation plus particulièrement représentée sur les figures 5 et 6, la platine 12 comporte, globalement transversalement, entre les deux paires de jambages 13, une zone de moindre résistance 21 propre à permettre de partager l'ensemble en deux tronçons 11A, 11B comportant chacun une paire de jambages 13.

Par exemple, et tel que représenté, cette zone de moindre résistance 21 résulte d'une gorge 22 entaillant sur sa surface inférieure la platine 12, et elle s'étend globalement transversalement au milieu de celle-ci, perpendiculairement à ses bords longitudinaux.

Dans la forme de réalisation représentée, cette gorge 22 a, en section transversale, un profil triangulaire.

Une fois les deux tronçons 11A, 11B ainsi individualisés, l'un d'eux, en l'espèce le tronçon 11B, peut être utilisé pour le repérage d'un quelconque conducteur électrique, non représenté, tandis que l'autre, en l'espèce le tronçon 11A, peut être utilisé pour le repérage d'un quelconque appareillage électrique 23 auquel est raccordé le conducteur électrique précédent.

Par exemple, et tel que représenté à la figure 7, cet appareillage électrique 23 est un bloc de jonction.

Pour recevoir un dispositif de repérage du type des tronçons 11A, 11B précédents, il comporte, localement, au moins un support 10', qui, formant un faux conducteur électrique 10, a la configuration générale, cylindrique et allongée, d'un tel conducteur électrique 10.

Bien entendu, la présente invention ne se limite pas aux formes de réalisation décrites et représentées, mais englobe toute variante d'exécution et/ou de combinaison de leurs divers éléments, dans le but défini par les revendications suivantes.

## Revendications

1. Dispositif de repérage du genre comportant, d'une part, une platine (12), qui est destinée à recevoir un message d'identification, et, d'autre part, au moins une paire de jambages (13), qui, disposés en vis-à-vis, sont propres à en permettre l'assujettissement à un quelconque support (10, 10'), et qui, dans l'intervalle (14) qui leur est commun, comportent chacun un retour (15) en direction de la platine (12), caractérisé en ce que, sur la largeur, au moins, de leur retour (15), appréciée parallèlement à la direction d'allongement de la platine (12), les jambages (13) bordent, chacun respectivement, un évidement (18) de la platine (12) donnant accès à un tel retour (15).

2. Dispositif de repérage suivant la revendication 1, caractérisé en ce qu'il comporte, à distance l'une de l'autre, deux paires de jambages (13).

3. Dispositif de repérage suivant la revendication 2, caractérisé en ce que, entre les deux paires de jambages (13), la platine (12) comporte, globalement transversalement, une zone de moindre résistance (21), propre à permettre de partager l'ensemble en deux tronçons (11A, 11B).

4. Dispositif de repérage suivant l'une quelconque des revendications 2, 3, caractérisé en ce que les deux paires de jambages (13) sont disposées chacune respectivement aux deux extrémités de la platine (12).

5. Dispositif de repérage suivant la revendication 4, caractérisé en ce que, pour l'une au moins des paires de jambages (13), l'évidement (18) de la platine (12) est une encoche ouverte sur le bord transversal correspondant de cette platine (12).

6. Dispositif de repérage suivant l'une quelconque des revendications 1 à 4, caractérisé en ce que, pour une paire de jambages (13), l'évidement (18) de la platine (12) est un ajour de contour fermé.

## Patentansprüche

1. Kennzeichnungsvorrichtung, umfassend einerseits eine Platine (12), die dazu bestimmt ist, eine Kennzeichnungsinformation aufzunehmen, und andererseits mindestens ein Paar von Schenkeln (13), die einander gegenüber angeordnet sind, die ihre Anbringung an einem beliebigen Träger (10, 10') gestatten und die in dem ihnen gemeinsamen Zwischenraum (14) jeweils eine Abwinklung (15) in Richtung der Platine (12) aufweisen, dadurch gekennzeichnet, daß die Schenkel (13) mindestens auf der parallel zur Richtung der Längserstreckung der Platine (12) gemessenen Breite ihrer Abwinklung (15) jeweils eine Aussparung (18) der Platine (12) säumen, die eine solche Abwinklung (15) zugänglich macht.

2. Kennzeichnungsvorrichtung nach Anspruch 1, dadurch gekennzeichnet, daß sie in einem Abstand voneinander zwei Paare von Schenkeln (13) aufweist.

3. Kennzeichnungsvorrichtung nach Anspruch 2, dadurch gekennzeichnet, daß die Platine (12) zwischen den beiden Paaren von Schenkeln (13) im wesentlichen in Querrichtung einen Bereich (21) geringerer Festigkeit aufweist, der es gestattet, die Einheit in zwei Abschnitte (11A, 11B) zu teilen.

4. Kennzeichnungsvorrichtung nach einem der Ansprüche 2, 3, dadurch gekennzeichnet, daß die beiden Paare von Schenkeln (13) jeweils an den beiden Enden der Platine (12) angeordnet sind.

5. Kennzeichnungsvorrichtung nach Anspruch 4, dadurch gekennzeichnet, daß die Aussparung (18) der Platine (12) mindestens bei einem der Paare von Schenkeln (13) ein auf dem entsprechenden Querrand dieser Platine (12) offener Ausschnitt ist.

6. Kennzeichnungsvorrichtung nach einem der Ansprüche 1 bis 4, dadurch gekennzeichnet, daß die Aussparung (18) der Platine (12) bei einem Paar von Schenkeln (13) ein Fenster mit geschlossenem Umriß ist.

## Claims

1. A marking device of the kind comprising on the one hand a plate portion (12) which is intended to receive an identification message and on the other hand at least one pair of leg portions (13) which disposed in mutually facing relationship are capable of permitting fastening thereof to any support (10, 10') and which in the space (14) which is common thereto each comprise a return portion (15) in the direction of the plate portion (12), characterised in that over the width at least of their return portion (15), as considered in parallel to the direction of elongation of the plate portion (12), the leg portions (13) each respectively border an opening (18) in the plate portion (12), giving access to such a return portion (15).

2. A marking device according to claim 1 characterised in that it comprises two pairs of leg portions (13) at a spacing from each other.

3. A marking device according to claim 2 characterised in that between the two pairs of leg portions (13) the plate portion (12) comprises generally transversely a zone (21) of lower strength, capable of permitting the assembly to be divided into two parts (11A, 11B).

4. A marking device according to either one of claims 2 and 3 characterised in that the two pairs of leg portions (13) are each respectively disposed at the two ends of the plate portion (12).

5. A marking device according to claim 4 characterised in that, for one at least of the pairs of leg portions (13), the opening (18) in the plate portion (12) is a notch which is open to the corresponding transverse edge of said plate portion (12).

6. A marking device according to any one of claims 1 to 4 characterised in that, for a pair of leg portions (13), the opening (18) in the plate portion (12) is an orifice with a closed contour.
